# EUROPÄISCHE PATENTANMELDUNG

(11) **EP 1 404 098 A2**
(43) Veröffentlichungstag der Anmeldung: **31.03.2004**
(21) Anmeldenummer: 03021794.7
(22) Anmeldetag: 26.09.2003
(51) Int. Cl.: H04M 7/00

(54) **Verfahren und System zum Aufbau einer VoIP-Telefonverbindung in einem gesicherten Netzwerk**

(30) Priorität: 30.09.2002 DE 10245547
(71) Anmelder: Tenovis GmbH & Co. KG, 60362 Frankfurt am Main (DE)
(72) Erfinder: Lang, Helmut, 64293 Darmstadt (DE); Schlesinger, Jürgen, 64572 Büttelborn (DE); Niebuhr, Axel, 65719 Hofheim-Lorsbach (DE); Rohrdrommel, Dieter, 63477 Maintal (DE)
(74) Vertreter: Patentanwaltskanzlei WILHELM & BECK

(57) **Zusammenfassung**

Erfindungsgemäß wird ein Verfahren beziehungsweise eine Schaltungsanordnung vorgeschlagen, bei der der Aufbau einer VoIP-Telefonverbindung zwischen einem externen Telefonendgerät (A) und einem zweiten Telefonendgerät (B) in einem gesicherten Netzwerk wie Intranet unter Nutzung des Internets (VoIP) erfolgt. Als erfindungswesentlich wird dabei angesehen, dass der Verbindungsaufbau in folgenden drei Schritten oder Teilen erfolgt. Das externe Telefonendgerät (A) wird über das Internet zunächst mit einem E-Proxy (2) eines zugeordneten Extranets verbunden, danach wird die Verbindung zwischen dem E-Proxy (2) und einem I-Proxy (3) des Intranets und anschließend die Verbindung zum zweiten Telefonendgerät (B) aufgebaut. Durch diese Schaltungsanordnung ergibt sich der Vorteil, dass teure Firewalls (VoIP-Firewalls) eingespart werden können und dennoch eine zuverlässige und sichere Telefonverbindung entsteht.

## Beschreibung

Die Erfindung geht aus von einem Verfahren beziehungsweise von einer Schaltungsanordnung zum Aufbau einer VoIP-Telefonverbindung (Voice over Internet Protocol), die zwischen einem externen ersten Telefonendgerät eines ersten Teilnehmers und einem zweiten Telefonendgerät eines zweiten Teilnehmers über das Internet durchgeführt wird, wobei das zweite Telefonendgerät vorzugsweise in einem gesicherten Netzwerk wie Intranet registriert ist, nach der Gattung der nebengeordneten Ansprüche 1 und 10. Es ist schon bekannt, das Internet, das ursprünglich als Datennetz konzipiert wurde, zunehmend auch zur Übertragung von Sprachinformationen zu nutzen. So können beispielsweise erhebliche Kosteneinsparungen insbesondere auch dann erzielt werden, wenn das Internet mit einem firmeninternen Netz wie Extranet oder Intranet verbunden wird. Der Zugriff auf Bereiche eines internen Firmennetzes muss natürlich besonders geschützt sein. Des weiteren muss sichergestellt sein, dass die Verbindung zuverlässig ist, da die IP-Telephonie zeitkritisch ist.

Bisher wurden diese Probleme beispielsweise dadurch gelöst, dass die im Firmennetz vorhandenen Firewalls um eine VoIP-Funktionalität erweitert wurden. Diese Lösung ist jedoch nur beschränkt anwendbar in einem kleineren Umfeld ohne Beteiligung eines Gatekeepers. Beim Einsatz von NAT (Network Address Translation) ist diese Lösung jedoch nicht brauchbar.

Bekannt ist auch, die Firewalls durch einen internen Gatekeeper zu steuern. Um dies zu erreichen, besteht eine direkte Verbindung zwischen dem Gatekeeper und der Firewall. Somit steuert der Gatekeeper über diese Verbindung entsprechend der vorliegenden Verbindungsanforderungen die Firewall. Nachteilig dabei ist, dass durch diese dynamische Steuerung neue Angriffspunkte entstehen können, die neue Sicherheitsmaßnahmen erfordern. Die erforderlichen Erweiterungen innerhalb des Gatekeepers und der Firewall sind daher sehr aufwändig.

Eine alternative bekannte Lösung besteht auch darin, die Firewall für die VoIP-Telephonie zu öffnen. In diesem Fall leitet die Firewall alle VoIP-Pakete ohne Bewertung an den Gatekeeper weiter. Der Gatekeeper verarbeitet die eintreffenden Pakete (Signalling, Media) und schaltet die entsprechenden Verbindungen. Dabei entsteht ein nicht unerhebliches Sicherheitsrisiko, da alle Ports für die RTP-Pakete (Real Time Protokoll) freigeschaltet werden und keine Kommunikation zwischen der Firewall und dem Gatekeeper stattfindet.

Das erfindungsgemäße Verfahren zum Aufbau einer VoIP-Telefonverbindung beziehungsweise die Schaltungsanordnung mit den Merkmalen der nebengeordneten Ansprüche 1 und 10 hat demgegenüber den Vorteil, dass die Telefonverbindung schrittweise in drei Teilverbindungen vom externen Telefonendgerät über das Internet zum Extranet, vom Extranet zum Intranet und vom Intranet zum zweiten Telefonendgerät beziehungsweise in umgekehrter Reihenfolge durchgeschaltet wird. Als besonders vorteilhaft wird dabei angesehen, dass die VoIP-Verbindung in beziehungsweise aus bestehenden IP-Netzen besonders sicher aufgebaut werden kann. Insbesondere bleiben dabei die bestehenden Sicherheitsmechanismen, beispielsweise nach dem H.235-Protokoll, erhalten. Der zusätzliche Einsatz beispielsweise einer VoIP-Firewall ist nicht unbedingt notwendig. Dennoch wird an den sicherheitsrelevanten Grenzen im Umfeld der VoIP-Verbindung ein Höchstmaß an Sicherheit erreicht.

Durch die in den abhängigen Ansprüchen aufgeführten Maßnahmen sind vorteilhafte Weiterbildungen und Verbesserungen des in den nebengeordneten Ansprüche 1 und 10 angegebenen Verfahrens beziehungsweise der Schaltungsanordnung gegeben. Als Besonders vorteilhaft wird auch angesehen, dass in den Schritten a) und c) die bekannten Protokolle H.323 oder SIP weiterhin verwendet werden können. Dadurch verringert sich der Installationsaufwand. Insbesondere sind keine neuen Protokolle zum Beispiel zwischen einer Firewall und dem Gatekeeper erforderlich.

Günstig erscheint auch die Lösung, im zweiten Schritt b) ein individuelles, proprietäres Protokoll für die Signalisierung zwischen dem E-Proxy des Extranets und dem I-Proxy des Intranets zu verwenden. Dadurch können auf einfache Weise individuelle Einstellungen realisiert werden, ohne die Effizienz der Schaltungsanordnung zu gefährden.

Um die Sicherheit beispielsweise gegen ein unbefugtes Eindringen weiter zu erhöhen, kann zusätzlich eine entsprechende Firewall installiert sein.

Eine sehr vorteilhaft Lösung besteht in der Möglichkeit, an Stelle der üblichen Rufnummer eine Kennung des Unternehmens einzugeben. Dies kann beispielsweise eine Kurzwahlnummer oder auch ein Buchstabencode mit alphanumerischen Zeichen sein. Derartige Kennungen können von einem Teilnehmer beispielsweise leichter im Gedächtnis behalten werden, wenn daraus der Firmenname ersichtlich ist.

Eine vorteilhafte alternative Lösung stellt auch die Möglichkeit dar, an Stelle der Rufnummer die entsprechende Email-Adresse einzugeben. Durch automatische Umwandlung der Email-Adresse in die entsprechende Telefonnummer, die beispielsweise durch den Gatekeeper durchgeführt wird, kann der gewünschte Teilnehmer leicht angewählt werden. Ein spezielles Telefonendgerät ist dazu nicht erforderlich.

Die Aufteilung der Rufnummer in einen öffentlichen Teil, die in der Regel die Firmensammelnummer darstellt und einen privaten Teil, also der Apparatenummer, kann durch einen Informationsserver beziehungsweise durch den Gatekeeper erfolgen.

In diesen Einrichtungen sind die entsprechenden Adressteile gespeichert, so dass leicht eine Zuordnung herstellbar ist.

Ist der anrufende Teilnehmer dem E-Proxy bekannt, beispielsweise bei einem Heimarbeitsplatz, dann kann der Verbindungsaufbau vereinfacht werden, in dem mit einem RAS-Protokoll (Registration Admission Status) gestartet wird.

Eine weitere Verbesserung wird auch darin gesehen, dass der Gatekeeper mit einem ACF-Signal (Admission Confirm) antwortet, da das zweite Telefonendgerät beim Gatekeeper registriert ist. Diese Meldung enthält die IP-Adresse des zweiten Teilnehmers, die dann innerhalb des Gatekeeper umgesetzt werden kann. Dabei ist besonders vorteilhaft, dass der Einsatz von NAT im internen Netzwerk beim Aufbau der Verbindung in vorteilhafter Weise ermöglicht wird.

Der Erfindung liegt die Aufgabe zugrunde, den sicheren Aufbau einer VoIP-Telefonverbindung in beziehungsweise aus IP-Netzen unter Nutzung von bestehenden integrierten Sicherheitsmechanismen zu verbessern. Diese Aufgabe wird mit den Merkmalen der nebengeordneten Ansprüche 1 und 10 gelöst.

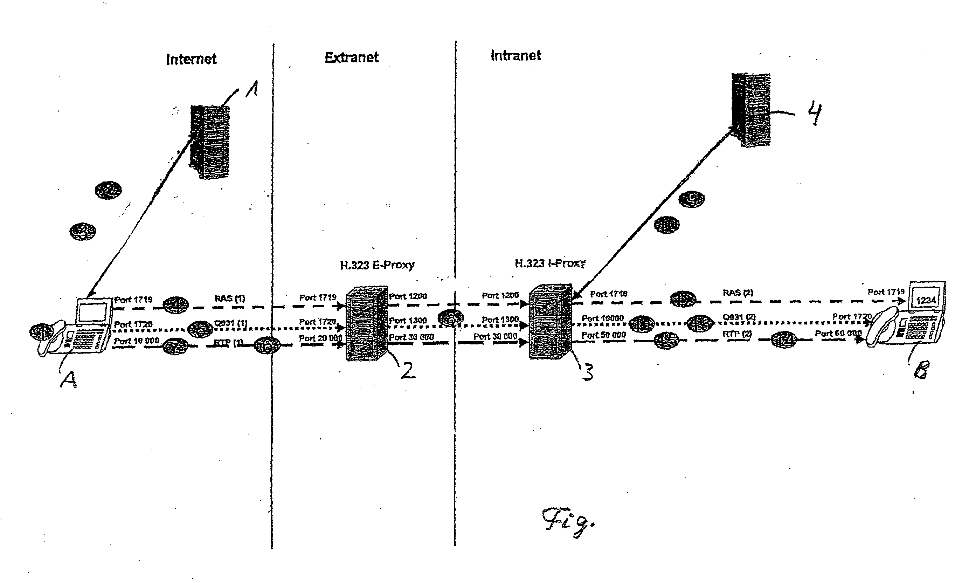

Ein Ausführungsbeispiel der Erfindung ist in der Zeichnung dargestellt und wird in der nachfolgenden Beschreibung näher erläutert.

Die Figur zeigt in schematischer Darstellung ein Ausführungsbeispiel der Erfindung mit einer Schaltungsanordnung, aus der der Aufbau einer VoIP-Verbindung zwischen einem externen ersten Telefonendgerät und einem zweiten Telefonendgerät in einem gesicherten Netzwerk, insbesondere in einem Firmennetzwerk unter Nutzung von in IP-Netzen bestehenden Sicherheitsmechanismen ersichtlich ist.

Zum besseren Verständnis der Erfindung wird entsprechend der Figur beispielhaft angenommen, dass ein erster Teilnehmer mit einem externen Telefonendgerät A einen zweiten Teilnehmer mit einem zweiten Telefonendgerät B über das per se bekannte Internet sprechen möchte (H.323 Verbindung). Vollständigkeitshalber sei erwähnt, dass bei Bedarf der nachfolgend beschriebene Verbindungsaufbau auch in umgekehrter Reihenfolge vom zweiten Telefonendgerät B zum ersten Telefonendgerät A durchgeführt werden kann.

Es wird angenommen, dass das zweite Telefonendgerät B in einem Intranet eines privaten, gesicherten Firmennetzes zum Beispiel bei einem Gatekeeper 4 registriert ist. Somit hat das Telefonendgerät B nicht nur Zugang zu allen Telefonendgeräten innerhalb des Intranets und auch eines verfügbaren Extranets der Firma, sondern es ist darüber hinaus mit öffentlichen Netzen verbindbar, wenn eine entsprechende Freigabe vorgesehen ist.

Das erste Telefonendgerät A kann ebenfalls, jedoch in einem anderen Firmennetz registriert sein oder es ist mit dem üblichen öffentlichen Telefonnetz verbunden. Des weiteren weist das Telefonendgerät A auf jeden Fall einen Zugang zum Internet auf, der mittels eines Informationsservers 1 erfolgt, so dass auch beim Telefonendgerät A eine VoIP-Verbindung über das Internet möglich ist.

Das Internet wurde ursprünglich für den insbesondere abhörsicheren, internationalen Datentransfer entwickelt und ist daher nicht unbedingt ideal für eine Telefonverbindung, da die Informationen paketweise auf unterschiedlichen Leitungswegen übertragen werden. Da im Gegensatz zu bekannten Telefonnetzen die Entfernungen zwischen den Teilnehmern jedoch keine Rolle spielen, sind VoIP-Verbindungen insbesondere für Ferngespräche besonders kostengünstig und attraktiv. Allerdings stehen diesen Vorteilen erhebliche technische Schwierigkeiten gegenüber.

Entgegen dem sonst üblichen Vorgehen beim Aufbau einer VoIP-Verbindung wird erfindungsgemäß vorgeschlagen - wie der Figur entnehmbar ist - aus Vereinfachungs- und Sicherheitsgründen die Verbindung mittels drei Teilverbindungen aufzubauen. Zunächst wird eine erste Teilverbindung über das Internet zwischen dem Telefonendgerät A und einem E-Proxy 2 im Extranet des Firmennetzes aufgebaut. Als Proxy wird üblicherweise eine Einrichtung verstanden, die Teil einer Sicherheitseinrichtung ist (Firewall) und unter anderem die ankommenden Protokolle für das eigene Netz umsetzt (und umgekehrt).

In einem zweiten Schritt wird eine Teilverbindung zwischen dem E-Proxy 2 und einem I-Proxy 3 des Intranets und in einem dritten Schritt zwischen dem I-Proxy 3 und dem Telefonendgerät B aufgebaut. Durch diesen schrittweisen Aufbau können in vorteilhafter Weise nicht nur die in IP-Netzen vorhandenen standardisierten Protokolle wie H.323, SIP insbesondere beim Aufbau der ersten und dritten Teilverbindung weiterhin genutzt werden, sondern es vereinfacht auch die Installation. Eine teure VoIP-Firewall mit all ihren Nachteilen ist nicht erforderlich.

Zum besseren Verständnis der Erfindung wird angenommen, dass der erste Teilnehmer (Telefonendgerät A) über das Internet eine Firma mit einer Kennung 7505 und hier den zweiten Teilnehmer mit der internen Rufnummer 1234 anrufen möchte. Er gibt dann wie üblich die entsprechende Ziffernfolge 7505 1234 ein. Alternativ ist auch vorgesehen, an Stelle der Rufnummer einen Namenscode oder eine Email-Adresse einzugeben, wie später noch erläutert wird.

Nach der Eingabe der Rufnummer sendet das Telefonendgerät A für den ersten Verbindungsteil einen Request (Anfrage) an den Informationsserver 1 seiner Domäne im Internet, der die Firmenkennung 7505 analysiert. Der Informationsserver 1 kann als Namens-Server oder Gatekeeper ausgebildet sein und ist ebenso wie die übrigen Einrichtungen 2,3,4 per se bekannt. (Aus Übersichtlichkeitsgründen sollen hier die Abläufe innerhalb des Informationsservers 1 beziehungsweise der Informationsaustausch zu anderen Informationsservern in anderen Domänen nicht näher betrachtet werden.) Als Antwort sendet der Informationsserver 1 eine Bestätigung (Confirm) mit der VoIP-Adresse des E-Proxys 2 an das Telefonendgerät A. Die einzelnen Schritte sind aus den mit Kreisen markierten Ziffern 1 bis 3 ersichtlich.

In einem 4. Schritt (Ziffer 4) wird beispielhaft angenommen, dass der erste Teilnehmer einen Heimarbeitsplatz hat und somit bekannt ist. In diesem Fall kann die erste Teilverbindung zwischen dem Telefonendgerät A und dem E-Proxy 2 bereits mit einem RAS (Admission Request) gestartet werden. In der Figur sind die einzelnen sequentiellen Schritte sowie die Ports 1719, 1720, die für die Steuerung notwendig sind, durch gestrichelte Linien dargestellt. Im allgemeinen trifft Schritt 4 nicht zu, dann würde es mit Schritt 5 weitergehen.

Im 5. Schritt (Ziffer 5) beginnt das Telefonendgerät A mit dem Aufbau der Verbindung zum E-Proxy 2 unter Nutzung des Protokolls Q.931. Dieses Protokoll enthält u.a. auch die Rufnummer 1234 des Telefonendgerätes B.

Danach startet gemäß Ziffer 6 und 7 der E-Proxy 2 nach erfolgreichem Aufbau von Q.931 den Aufbau des H.245 Steuerungskanals zum Telefonendgerät B. Des weiteren wird unter Nutzung des ausgehandelten Ports H.245 der Multimediakanal (Port 10000) zwischen dem Telefonendgerät A und dem E-Proxy 2 aufgebaut. RTP bedeutet dabei Real Time Protocol (geeignet für die Sprachübertragung).

Die zweite Teilverbindung zwischen dem E-Proxy und dem I-Proxy wird parallel zu der ersten Teilverbindung aufgebaut, wie oben beschrieben wurde (Ziffer 8). Das benutzte Protokoll kann H.323, SIP oder ein individuelles, proprietäres Protokoll sein. Wird das H.323 Protokoll verwendet, kann der Ablauf wie zuvor beschrieben mit den Protokollen RAS, Q.931, H.245 ausgebildet sein. Bei Verwendung eines proprietären Protokolls können natürlich individuelle Merkmale und Funktionen realisiert werden.

Für die dritte Teilverbindung sendet entsprechend der Ziffern 9 und 10 die I-Proxy 3 ein ARQ-Signal (Admission Request) ua. mit der Rufnummer 1234 des zweiten Telefonendgerätes B zum Gatekeeper 4 seiner Domäne. Da das Telefonendgerät B bei dem Gatekeeper 4 registriert ist, antwortet der Gatekeeper 4 mit einem AC F-Signal (Admission Confirm). Diese Meldung enthält die IP-Adresse des Telefonendgerätes B (Intranet). Der Gatekeeper 4 kennt auch Kennungen, Namen und Email-Adressen usw. des registrierten Telefonendgerätes B, so dass er die ankommende Kennung leicht in die entsprechende Rufnummer umsetzen kann. Die Verwendung eines NAT (Network Address Translater) im internen Netzwerk beim Aufbau der Verbindung ist somit mit großem Vorteil verwendbar.

Entsprechend der Ziffer 11 wird parallel zum Verbindungsaufbau zwischen dem E-Proxy 2 und I-Proxy 3 die Verbindung zwischen dem I-Proxy 3 und dem Telefonendgerät B aufgebaut. Als Protokoll kann vorteilhaft wieder H.323, SIP oder ein proprietäres Protokoll verwendet werden. Wird das H.323 Protokoll eingesetzt, startet der Verbindungsaufbau mit einer Setup-Meldung gemäß Q.931 vom I-Proxy 3 zum Telefonendgerät B.

Gemäß Ziffer 12 sendet das Telefonendgerät B nun ein ARQ-Signal zum I-Proxy 3, welches durch ein ACF-Signal vom I-Proxy 3 bestätigt wird.

Das Telefonendgerät B bestätigt den erfolgreichen Aufbau durch Senden der entsprechenden Q.931-Meldung (Alerting, Connect) zum I-Proxy 3 (Ziffer 13).

Anschließend startet gemäß Ziffer 14 nach erfolgreichem Aufbau der Q.931-Verbindung der I-Proxy 3 den Aufbau des H.245 Steuerungskanals zum Telefonendgerät B.

Schließlich wird gemäß der Ziffer 15 durch Benutzung der ausgehandelten Ports H.245 der Multimediakanal zwischen dem I-Proxy 3 und dem Telefonendgerät B aufgebaut, so dass die Sprachübertragung abgewickelt werden kann.

Das angeführte Ausführungsbeispiel beschreibt den Verbindungsaufbau zwischen den Telefonendgeräte A und B mittels einer Rufnummer. Sollten andere Verfahren wie beispielsweise Email-Adressen, alphanumerische Namen oder dergleichen zum Einsatz kommen, so würde der Informationsserver 1 im Internet die Adressauflösung für den öffentlichen Teil, beispielsweise firma.de und der Gatekeeper 4 für den privaten Teil, zum Beispiel "xy" bearbeiten, wenn die Email-Adresse xy@firma.de lauten würde.

### Bezugszeichenliste

- A: erstes Telefonendgerät
- B: zweites Telefonendgerät
- 1: Informationsserver
- 2: E-Proxy
- 3: I-Proxy
- 4: Gatekeeper

## Patentansprüche

1. Verfahren zum Aufbau einer VoIP-Telefonverbindung, die zwischen einem externen ersten Telefonendgerät (A) eines ersten Teilnehmers und einem zweiten Telefonendgerät (B) eines zweiten Teilnehmers über das Internet durchgeführt wird, wobei wenigstens eines der beiden Telefonendgeräte (A,B) vorzugsweise in einem gesicherten Netzwerk wie Intranet registriert ist, **dadurch gekennzeichnet, dass** der Verbindungsaufbau in folgenden Schritten durchgeführt wird:
a) das erste Telefonendgerät (A) wird zunächst über das Internet mit einem E-Proxy (2) eines Extranets des gesicherten Netzwerkes verbunden, das dem anzuwählenden zweiten Telefonendgerät (B) zugeordnet ist,
b) das E-Proxy (2) des Extranets stellt eine Verbindung zu einem I-Proxy (3) eines nachgeschalteten Intranets des zweiten Telefonendgerätes (B) her und
c) das I-Proxy (3) des Intranets vollzieht den Verbindungsaufbau zum zweiten Telefonendgerät (B).

2. Verfahren nach Anspruch 1, **dadurch gekennzeichnet, dass** für den Verbindungsaufbau in den Schritten a) und c) bekannte Protokolle wie H.323 oder SIP verwendet werden.

3. Verfahren nach einem der vorhergehenden Ansprüche, **dadurch gekennzeichnet, dass** im zweiten Schritt b) für die Signalisierung zwischen dem E-Proxy (2) und dem I-Proxy (3) ein individuelles, proprietäres Protokoll verwendet wird.

4. Verfahren nach einem der vorhergehenden Ansprüche, **dadurch gekennzeichnet, dass** zur Vermeidung eines unberechtigten Zugriffs in einem Proxy (2,3) eine Firewall installiert wird.

5. Verfahren nach einem der vorhergehenden Ansprüche, **dadurch gekennzeichnet, dass** an Stelle der Rufnummer eine Kennummer des Unternehmens eingegeben wird.

6. Verfahren nach einem der Ansprüche 1 bis 4, **dadurch gekennzeichnet, dass** an Stelle der Rufnummer eine Email-Adresse eingegeben wird.

7. Verfahren nach Anspruch 6, **dadurch gekennzeichnet, dass** ein Informationsserver (1) die Adressauflösung für den öffentlichen Teil (Domainname) und ein Gatekeeper (4) für den privaten Teil durchführt.

8. Verfahren nach einem der vorhergehenden Ansprüche, **dadurch gekennzeichnet, dass** bei einem bekannten ersten Teilnehmer mit dem Telefonendgerät (A) der Verbindungsaufbau zum E-Proxy (2) mit einem RAS-Protokoll gestartet wird.

9. Verfahren nach einem der vorhergehenden Ansprüche, **dadurch gekennzeichnet, dass** der Gatekeeper (4) mit einem ACF-Signal antwortet, das die IP-Adresse des zweiten Telefonendgerätes (B) enthält.

10. Schaltungsanordnung zum Aufbau einer VoIP-Telefonverbindung, die zwischen einem externen ersten Telefonendgerät (A) und einem zweiten Telefonendgerät (B) über das Internet durchführbar ist, wobei wenigstens das zweite Telefonendgerät (B) vorzugsweise in einem gesicherten Netzwerk wie Intranet registriert ist, **dadurch gekennzeichnet**,
a) dass zum Aufbau der Verbindung das erste Telefonendgerät (A) zunächst über das Internet mit einem E-Proxy (2) eines Extranets des gesicherten Netzwerkes verbindbar ist, das dem anzuwählenden zweiten Telefonendgerät (B) zugeordnet ist,
b) dass danach mittels des E-Proxys (2) eine Verbindung zu einem I-Proxy (3) eines nachgeschalteten Intranets herstellbar ist, bei dem das zweiten Telefonendgerät (B) registriert ist und
c) dass das I-Proxy (3) den Verbindungsaufbau zum zweiten Telefonendgerät (B) vollzieht.
